(19) Europäisches Patentamt
European Patent Office
Office européen des brevets

(11) Publication number: **0 022 907**
**A1**

(12) # EUROPEAN PATENT APPLICATION

(21) Application number: 80102684.0

(22) Date of filing: 14.05.80

(51) Int. Cl.$^3$: A 43 B 5/16
B 29 F 1/10

(30) Priority: 18.07.79 US 40093

(43) Date of publication of application:
28.01.81 Bulletin 81/4

(84) Designated Contracting States:
AT BE CH DE FR GB IT LI LU NL SE

(71) Applicant: BROOKFIELD ATHLECTIC SHOE COMPANY, INC.

East Brookfield Massachusetts(US)

(72) Inventor: Landay, David L.
50 Willow Crescent
Brookline, Massachusetts(US)

(72) Inventor: Wolf, Alvan H.
61 Valley Hill Drive
Worcester, Massachusetts(US)

(74) Representative: von Bezold, Dieter, Dr. et al,
Patentanwälte Dr. D. von Bezold, Dipl.-Ing. P. Schütz,
Dipl.-Ing. W. Heusler Maria-Theresia-Strasse 22
Postfach 86 02 60 D-8000 München 86(DE)

(54) **Roller skating shoe and method for its manufacture.**

(57) Roller skating shoe with injection molded sole (12) in which receptacles (26,26a,62) are provided that support the wheel hangers and wheels (40). The sole (12) shown has a structural beam "T" profile, the flange of which supports be foot and the lower rib of which has an irregular lower edge forming a series of apertured angled bosses (22,24) to receive the wheel hanger structure (42). Receptacles in the form of embedded threaded connectors (26) enable bolting of the wheel hangers directly to the injected sole (12). The method for forming this shoe includes placing the threaded connectors (26) into the mold and then injection molding the sole of semi-rigid plastic directly against a string lasted upper held in place by a last.

EP 0 022 907 A1

./...

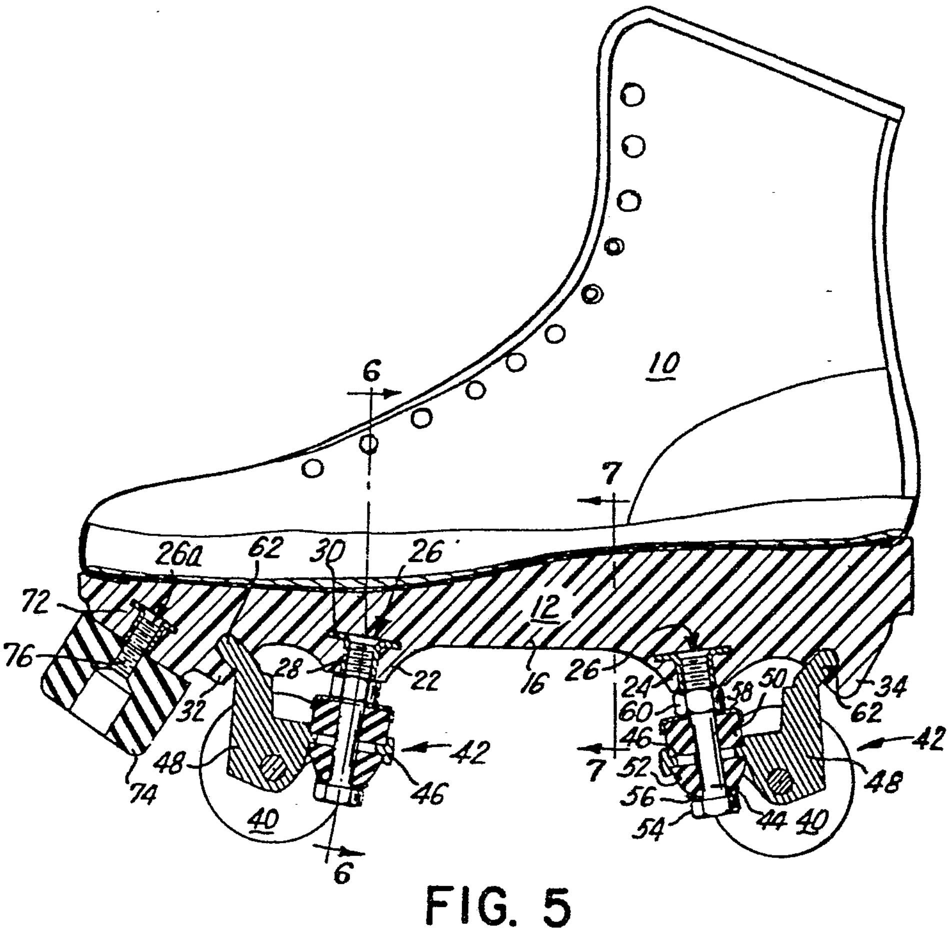

10
12
16
22
24
26
26a
28
30
32
34
40
42
44
46
48
50
52
54
56
58
60
62
72
74
76
6
7


FIG. 5

10810 EP /H/Elf

U.S.Serial No.40,093
Filed May 18, 1979

BROOKFIELD ATHLETIC SHOE COMPANY, INC.
East Brookfield, Massachusetts,USA

TITLE MODIFIED
see front page

Roller Scating Shoe

Introduction and Background

This invention relates to roller skating shoes or boots, for instance rink skates which permit dancing and strenuous skating. In such skates a shoe or boot supporting the foot is secured to skate wheels of the roller bearing type. These wheels are permanently mounted below the plane of the sole of the shoe by hangers (trucks).

Prior roller skating shoes have employed fully formed shoes or boots which have been secured to a metal plate from which the wheel hangers and wheels have depended.

## Summary of the Invention

According to the invention, the method of forming a roller skating shoe by joining to the bottom of a shoe upper an attachment structure to enable wheel supports to be secured to the shoe is characterized by the steps of: (1) providing an injection mold defining the reverse form of a downwardly protruding wheel attachment structure for extending along the bottom of the shoe sole; (2) closing the mold means with the upper; and (3) injecting a molding compound into the mold (in one or more steps) to form the attachment structure, and to adhesively bind the attachment structure *in situ* to the shoe.

In preferred embodiments, the method is further characterized: (1) by the fact that the mold comprises a cavity which defines the reverse form of a sole and of the attachment structure, and the injection is performed in a single step which fills the mold, simultaneously forming the sole and downwardly extending attachment strucutre, and which bonds said sole *in situ* to said upper; (2) by the step of positioning in the mold within the reverse form of the attachment structure, devices (e.g. pre-formed receptacle elements or molding pins to form apertures for struts) that form receptacles to receive parts of wheel mounting supports and the injection molding step establishes the permanent position of the receptacles to receive said wheel mounting supports; (3) by the fact that at least some of the devices comprise pre-formed threaded rigid connectors that are placed in the mold and are permanently embedded in the attachment structure as a result of the injection molding; (4) by bolting wheel supports to the molded structure by parts inserted in the permanently positioned receptacles; and (5) by the fact that the injection molding step is effective to adhesively join the downwardly protruding attachment structure to a string lasted upper.

The invention also features a roller skating shoe formed by the above processes. Preferably, (1) the shoe has an injection molded wheel attachment structure formed of molding composition and extending along the bottom of the shoe, wheel attachment structure being in situ adhesively bonded to the shoe by injection molding; (2) the injection molded wheel attachment structure is integral with an injection molded sole of the shoe, the sole being in situ bonded to the upper by injection molding; (3) receptacles are molded in position in the downwardly protruding molded wheel attachment structure; (4) the receptacles include threaded connectors known per se, and the material of the injected attachment structure is in a permanent embedding relationship about the threaded connectors, with skate wheel hangers inserted in the receptacles and threaded into the connectors; (5) the threaded connectors comprise tubular portions defining the threads and upper enlarged portions embedded in the injection molded material for resisting pull-out; (6) the sole and wheel attachment structure define a structural beam profile, the foot-supporting sole comprising the upper flange thereof; (7) the injection molded structural beam profile in transverse cross section is of T form, the upper flange of the T defining the foot supporting sole portion extending over the width of the shoe, and the lower vertical portion comprising the attachment structure in the form of a relatively narrow longitudinal structural rib in which receptacles are molded; (8) the upper is a string lasted upper and the injection molded sole is bonded directly to the margins of said string lasted upper; (9) the shoe includes an insole against which said injection molded sole is formed; (10) the injection molded attachment structure is of irregular longitudinal contour defining a spaced apart pair of first bosses, receptacles molded into the material within said bosses for permanently joining wheel hangers to said attachment structure, a pair of second bosses, one spaced forward of the forward first boss and one spaced rearward of the rearward first boss, and the second bosses have receptacles slideably receiving bracing struts of the hangers; (11) there is a third forwardmost injection molded boss for mounting a toe stop; (12) one of the first pair of bosses is located at the ball region of the foot and the other of the pair is located in the region of the forward part of the heel, the bosses extending downwardly at a divergent angle; (13) the bosses are integral formations of an injection molded lower, central structural rib extending the length of the shoe; and (14) the molding composition is semi-rigid polyvinyl chloride.

## Brief Descprition of the Drawings

Fig. 1 is a side view of a roller skate showing in solid lines the injection molded sole in the form of a structural beam supporting roller skating wheels;

Fig. 2 is a bottom plan view of the structural beam sole;

Fig. 3 and Fig. 4 are toe end and heel end views of the shoe of Fig. 1;

Fig. 5 is a side view, partially in cross section, of the roller skating shoe of Fig. 1;

Figs. 6 and 7 are cross sectional views taken on lines 6-6 and 7-7 respectively of Fig. 2;

Fig. 8 is a diagrammatic view of an upper on a last before being brought into molding position for injection molding of the structural beam sole, and

Fig. 9 is a view similar to Fig. 8 of the upper last in molding position.

## Description of Preferred Embodiment

Referring to the figures, a string lasted upper 10 in the form of a roller skating boot is adhesively bonded by injection molding to a beam sole 12 having a T beam section profile as shown in Figs. 6 and 7. The top flange 14 of the T profile extends the full width of the upper. The bottom, vertical leg or rib 16 of the T is narrower and extends longitudinally over the length of the boot. The entire T profile is a unitary molding. Upper edges of the flange of the T are injection molded directly to the string lasted margins 18 of the upper, and inwardly thereof, to an insole 20. As shown in Figs. 1 and 5 the lower edge of the vertical leg 16 of the injection molded sole is of irregular form. Main bosses 22 and 24, corresponding in position respectively to the ball of the foot and the forward portion of the heel, depend downwardly at a divergent angle. Embedded in the injection molded material in these bosses are threaded connectors 26 each comprising a tubular portion 28 (length 1/2", diameter 3/8") defining connecting threads and an enlarged upper portion 30, (outer diameter 1") serving to resist pull-out of the threaded connectors. A second set of apertured bosses 32 and 34 is provided, boss 32 being spaced forward of the boss 22 at the ball of the foot, and boss 34 is located below the rearward portion of the heel, these bosses extending downwardly at a convergent angle. Wheels 40 of the roller skates are mounted by typical hanger structures 42. Each structure comprises a bolt 44 extending through a metal ring 46 which is integral with bracing strut 48. The bolt 44 extends through rubber upper and lower cushion pads 50 and 52. The head 54 of the bolt bears against metal cap 56, lying against pad 52, and the upper side of the top pad 50 is similarly bounded by cap 58, compressed against separator 60 which lies against the respective boss. By threading bolt 44 into the threads of tubular section 28 of the receptacles the rubber pads 50 and 52 are compressed between end caps 56 and 58 and the hanger is joined to the injection molded beam sole. Strut 48 integral with each hanger has a strut end 62 slideably inserted in the aperture formed in bosses 32 and 34 respectively for the front and rear hanger units. A forwardmost boss 72 is provided in the toe region using a threaded receptacle 26a molded therein, this receptacle being a threaded connector similar in construction to threaded connectors 26. A resilient toe stop 74 is bolted to this boss by bolt 76. Advantageously the sole-defining top flange tapers in thickness from a normal sole thickness at the ball of the foot to a thickness of the order of one inch, to suitably raise the heel and at the same time add greatly to the structural properties for properly joining the axles of the wheels.

A typical roller skate shoe of 10 1/2 inches length has the following approximate dimensions for use with typical truck assemblies:

$t_1$ (thickness of sole at toe) 1/4 inch

$t_2$ (thickness of sole at heel) 1 inch

$t_3$ (thickness of sole at ball) 1/4 inch

$t_4$ (thickness of sole at section 7) 3/4 inch

$t_5$ (maximum thickness of stiffening rib in toe region) 7/8 inch

$t_6$ (maximum thickness of stiffening rib in heel region) 7/8 inch

$w_1$ (maximum width of sole in front view) 3 5/8 inch

$w_2$ (width of sole in rear view) 2 3/4 inch

$w_r$ (width of stiffening rib) 1 inch

<u>lengths from tip of toe</u>

$\ell_1$ (toe stop bolt hole) 5/8 inch

$\ell_2$ (forward hanger strut hole) 2 1/8 inch

$\ell_3$ (forward hanger bolt hole) 3 5/8 inch

$\ell_4$ (rear hanger bolt hole) 7 7/8 inch

$\ell_5$ (rear hanger strut hole) 9 1/2 inch

According to the invention it is found that a semi-rigid plastic, suitable for defining a comfortable sole of a skating shoe or boot can also, by means of its beam-form profile, provide structural rigidity such that the previously required metal plate of prior shoe skates can be entirely dispensed with and roller skate carriages can be directly joined to this integral sole-beam unit.

The presently preferred molding material is a semi-rigid PVC of hardness on the Shore D scale of 55 and specific gravity 1.34. Such material may be obtained from Great American Chemical Company of Fitchburg, Massachusetts, product number 0355.

## Process of Manufacture

In the process of manufacture the upper 10 is cut and sewn. By conventional string-lasting techniques it is then formed about a suitable last 90 and is placed in position over an injection molding mold. This mold comprises sole plate 92 and mold ring formed by ring halves 94 and 96. The upwardly facing surface of the sole plate 92 is specially formed to define the contour of the beam sole and the bosses that have been discussed. Also, prior to molding, threaded connectors 26, 26a are placed in position on pins in the sole plate, ready to be molded into the body of the injection molded sole. A fiber board insole 20 suggested by dotted line in Fig. 8 is also applied to the bottom of the lasted upper, held in position by a set of pins protruding from the last. Apertures in the insole permit plastic to flow through the insole against the last at spaced apart points in the arch region of the boot, see Fig. 7, to further anchor the insole.

With the insole 20 in place on the last, the last 90 with the upper 10 are lowered into the molding position shown in Fig. 8 and the hot, molten fluid plastic is injected by mechanism 100 into the mold to form the beam contour shown in the figures. After suitable cooling the mold parts are opened and the now-formed sole as shown in Fig. 1, bonded by injection molding to the upper 10, is withdrawn from the mold. Thereafter the hanger and wheel hardware as previously described are inserted into the receptacles and threaded into position and the toe stop is similarly secured into position. A sock liner 21 is applied over the insole to complete the shoe. The receptacles may vary in form, and under the broadest aspects of the invention may comprise through-bolt holes, formed by pins in the mold, and the hangers can be joined by through-bolts extending to recesses below the insole.

The resulting shoe construction and method permit a high quality skating shoe to be provided having many new and advantageous features. The steel plate can be omitted. A shoe or boot of almost any style can be employed. The injection molding of the sole and beam permit stylish selection by suitable coloring agents of the sole material. And the overall unit can be lighter in weight and less expensive to make.

What is claimed is:

1. A method of forming a roller skating shoe comprising joining to the bottom of a shoe upper an attachment structure to enable wheel supports to be secured to the shoe, characterized by the steps of

providing an injection mold defining the reverse form of a downwardly protruding wheel attachment structure (16, 22, 24, 32, and 34) for extending along the bottom of the shoe sole,

closing the mold means with the upper, and

injecting a molding compound into the mold (in one or more steps) to form said attachment structure, and to adhesively bind the attachment structure _in situ_ to the shoe.

2. The method of claim 1 further characterized in that said mold comprises a cavity which defines the reverse form of a sole and of said attachment structure, and performing said injection in a single step which fills said mold, to simultaneously form said sole and downwardly extending attachment structure, and bonds said sole _in situ_ to said upper.

3. The method of claim 1 or 2 further characterized by positioning in the mold within the reverse form of the attachment structure, devices (e.g. pre-formed receptacle elements 26 and 26a or molding pins) to form apertures for struts (62) that form receptacles to receive parts (40, 62) of wheel mounting supports (42) and

said step of injection molding establishing the permanent position of said receptacles to receive said wheel mounting supports.

4. The method of claim 3 characterized in that at least some of said devices comprise pre-formed threaded rigid connectors (26) that are placed in the mold and are permanently embedded in said attachment structure as a result of said injection molding.

5. The method of claim 3 or 4 for completing a roller skate further characterized in bolting wheel supports (42) to said molded structure by parts inserted in said permanently positioned receptacles.

6. The method of any of foregoing claims further characterized in that said upper is a string lasted upper (known per se) and said injection molding step is effective to adhesively join said downwardly protruding attachment structure to said string lasted upper.

7. A roller skating shoe characterized by being formed according to any of the claims 1-6.

8. A roller skating shoe comprising an upper and joined thereto an attachment structure enabling wheel supports to be secured to the upper, characterized in that said shoe has an injection molded wheel attachment structure (16, 22, 24, 32, and 34) formed of molding composition and extending along the bottom of the shoe, said wheel attachment structure being in situ adhesively bonded to said shoe by injection molding.

9. The roller skating shoe of claim 8 further characterized in that said injection molded wheel attachment structure is integral with an injection molded sole of said shoe, said sole being in situ bonded to said upper by injection molding.

10. The roller skating shoe of claim 8 or 9 further characterized in that receptacles (26 and 26a; or openings for pins 62) are molded in position in said downwardly protruding molded wheel attachment structure.

11. The roller skating shoe of claim 10 further characterized in that said receptacles include threaded connectors (26 and 26A) known per se, the material of said injected attachment structure being in a permanent embedding relationship about said threaded connectors, skate wheel hangers inserted in said receptacles and threaded into said connectors.

12. The roller skating shoe of claim 11 further characterized in that said threaded connectors comprise tubular portions (28) defining the threads and upper enlarged portions (30) embedded in the injection molded material for resisting pull-out.

13. The roller skating shoe of claim 9 further characterized in that said sole and wheel attachment structure define a structural beam profile, the foot-supporting sole comprising the upper flange (14) thereof.

14. The roller skating shoe of claim 13 further characterized in that said injection molded structural beam profile in transverse cross section is of T form, the upper flange of the T defining the foot supporting sole portion extending over the width of the shoe, and the lower vertical portion (16) comprising said attachment structure in the form of a relatively narrow longitudinal structural rib in which receptacles are molded.

15. The roller skating shoe of any of the foregoing claims 9, 13 or 14 further characterized in that said upper is a string-lasted upper and the injection molded sole is bonded directly to the margins of said string-lasted upper.

16. The roller skating shoe of any of the foregoing claims 9, 13, 14 or 15 further characterized in that it includes an insole against which said injection molded sole is formed.

17. The roller skating shoe of any of the foregoing claims 8-16 further characterized in that said injection molded attachment structure is of irregular longitudinal contour defining a spaced apart pair of first bosses (22 and 24), receptacles molded into the material within said bosses for permanent joining wheel hangers to said attachment structure, a pair of second bosses (32 and 34), one spaced forward of the forward first boss and one spaced rearward of the rearward first boss, said second bosses having receptacles slideably receiving bracing struts (48) of said hangers.

18. The roller skating shoe of claim 17 further characterized in that there is a third forwardmost injection molded boss (72) for mounting a toe stop.

19. The roller skating shoe of claim 17 or 18 further characterized in that one of said first pair of bosses is located at the ball region of the foot and the other of said pair is located in the region of the forward part of the heel, said bosses extending downwardly at a divergent angle.

20. The roller skating shoe of any of the foregoing claims 17-19 further characterized in that said bosses are integral formations of an injection molded lower, central structural rib (16) extending the length of the shoe.

21. The roller skating shoe of any of the foregoing claims characterized the molding composition is semi-rigid polyvinyl chloride.

FIG. 1

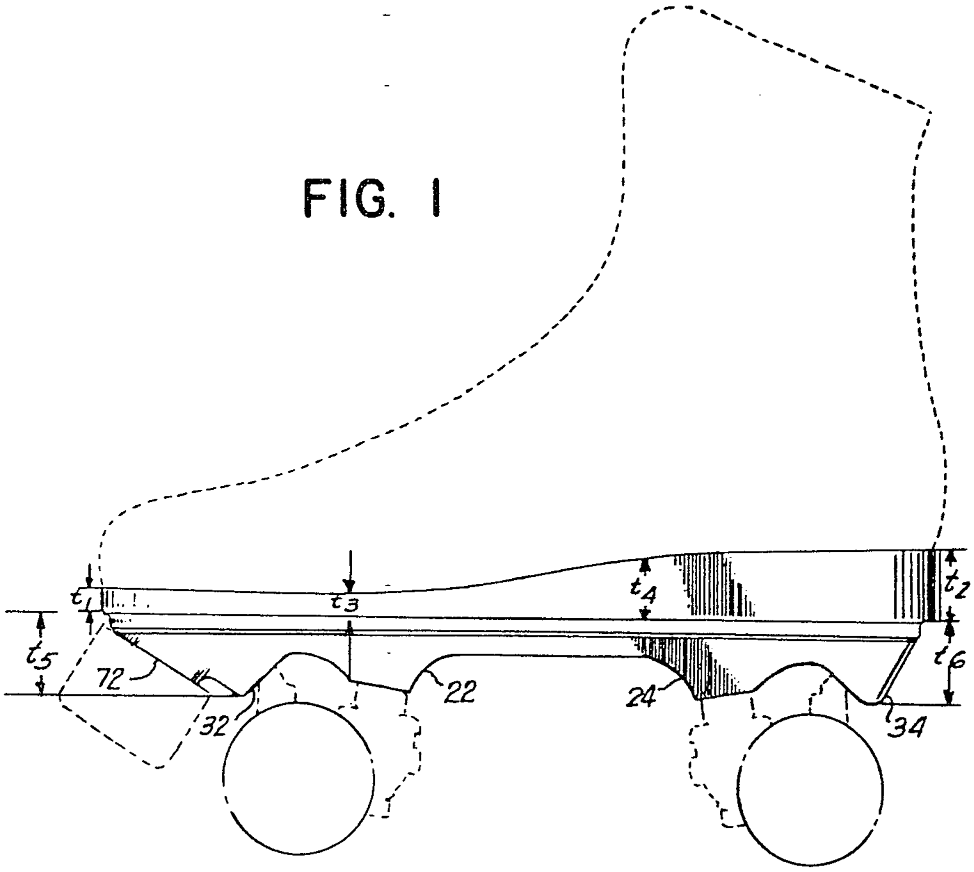


FIG. 2

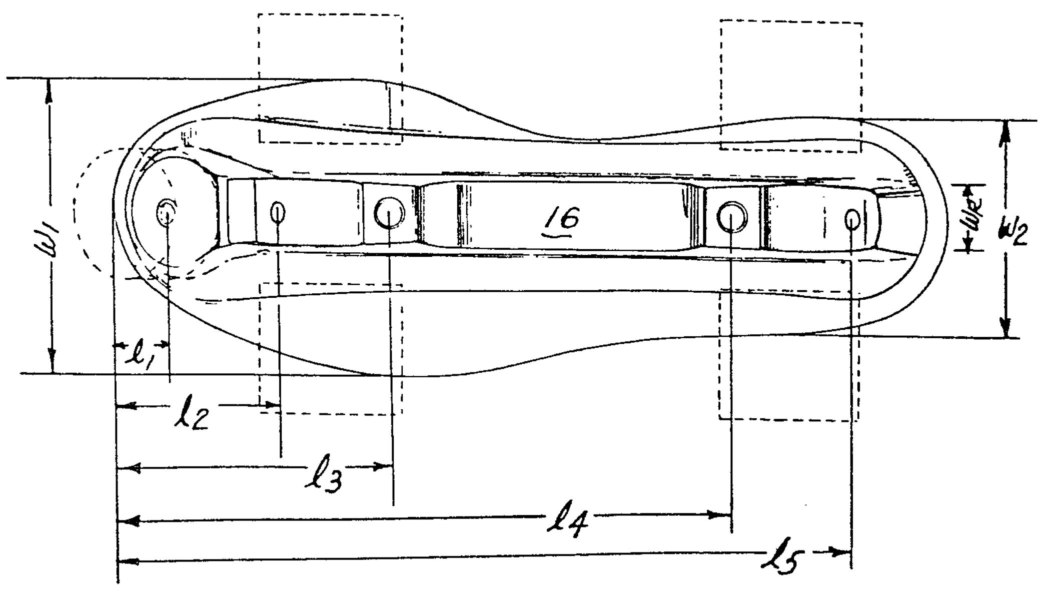

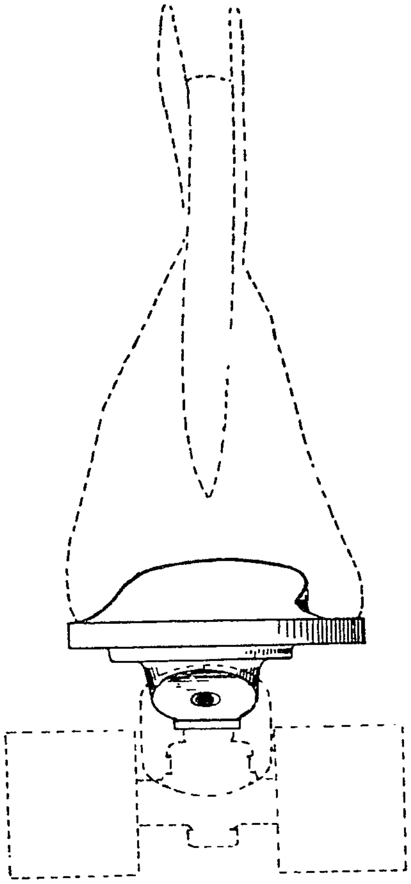

FIG. 3

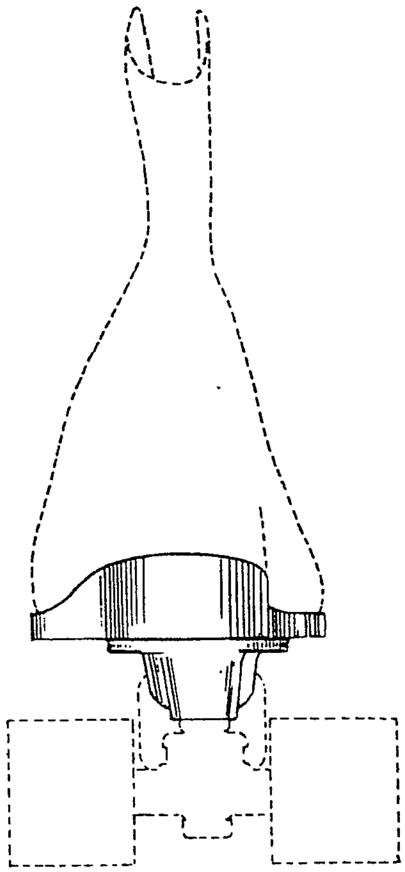

FIG. 4

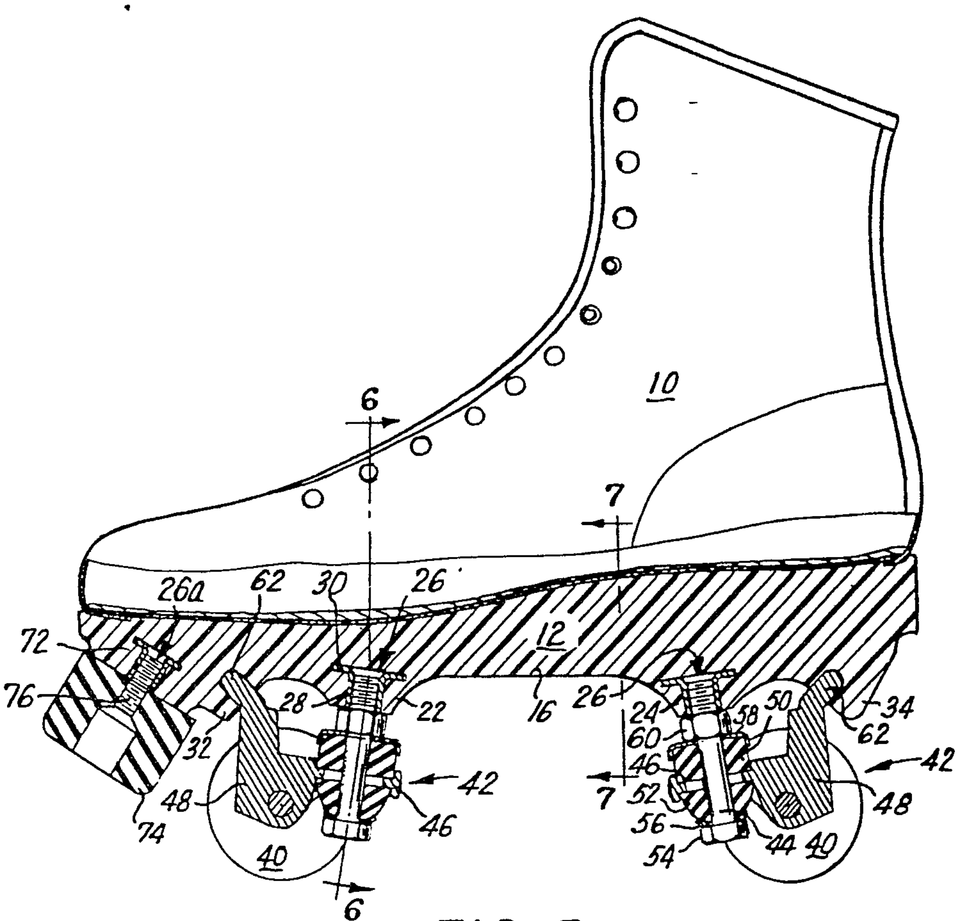


FIG. 5

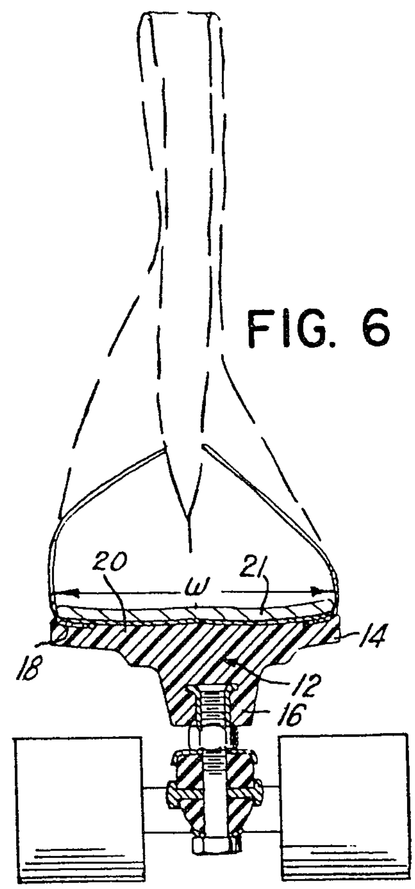


FIG. 6

FIG. 7

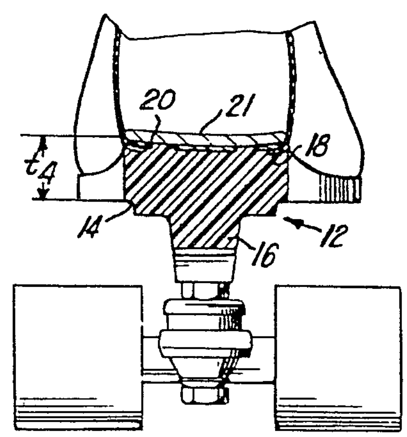

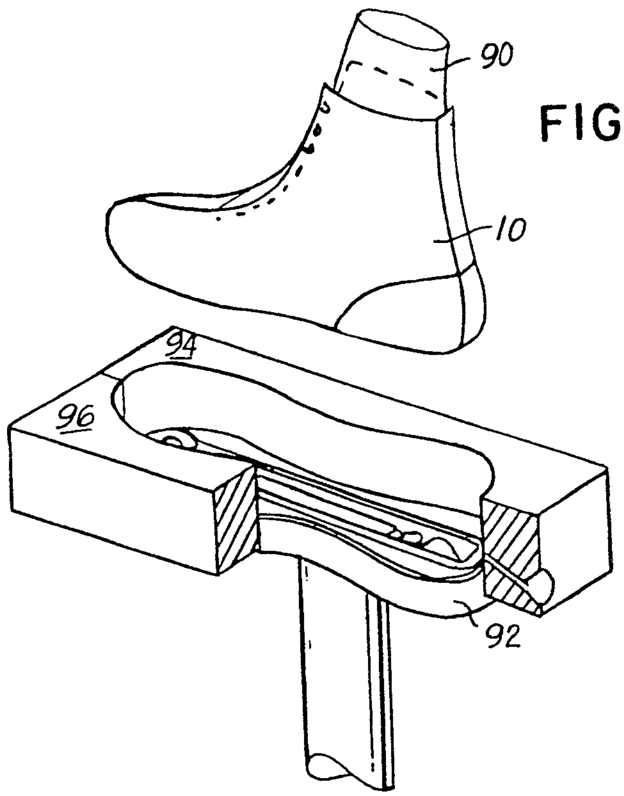


FIG. 8

FIG. 9

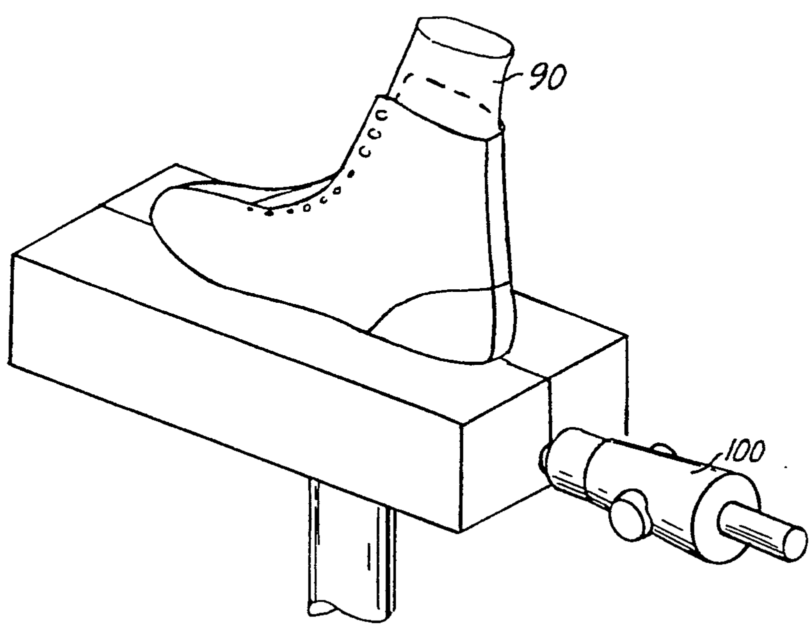

0022907

Application number

European Patent Office

# EUROPEAN SEARCH REPORT

EP 80 10 2684

## DOCUMENTS CONSIDERED TO BE RELEVANT

| Category | Citation of document with indication, where appropriate, of relevant passages | Relevant to claim |
|---|---|---|
| | FR - A - 1 590 825 (F. STUBBE) | 1,2,6-9,15,16 |
| | US - A - 3 876 176 (E. MORIN) | 1-12,15,21 |
| | US - A - 3 597 864 (A. McNEIL) | 1,3-5,7,8,10,11,12,21 |
| | DE - B - 2 338 942 (A. DASSLER) | 1-11 |
| | BE - A - 815 142 (BATA)<br>* The whole document, inparticular 5 *<br>-- | 1,8,21 |
| | FR - A - 2 013 165 (BOTANA)<br>---- | 1,13,14 |

CLASSIFICATION OF THE APPLICATION (Int Cl. 3)

A 43 B 5/16
B 29 F 1/10

TECHNICAL FIELDS SEARCHED (Int.Cl. 3)

A 43 B
B 29 F
A 43 C
A 63 C

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 26-06-1980 | DECLERCK |

EPO Form 1503.1 06.78